# EUROPÄISCHE PATENTANMELDUNG

(11) **EP 4 678 472 A1**
(43) Veröffentlichungstag der Anmeldung: **14.01.2026**
(21) Anmeldenummer: 24187435.3
(22) Anmeldetag: 09.07.2024
(51) Int. Cl.: B60Q 1/00, F21S 43/14, F21S 43/19, F21S 43/237, F21S 43/245, F21S 43/249, F21S 43/20, F21S 43/27, F21S 43/50, F21S 45/00, F21S 45/50, B60Q 1/26

(54) **FAHRZEUGLEUCHTE**

(71) Anmelder: ZKW Group GmbH, 3250 Wieselburg (AT)
(72) Erfinder: Zeuner, Markus, 3240 Mank (AT); Bierwipfl, Christoph, 3376 St. Martin (AT)
(74) Vertreter: Patentanwaltskanzlei Matschnig & Forsthuber OG

(57) **Zusammenfassung**

Die Erfindung betrifft eine Fahrzeugleuchte (1), umfassend
- zumindest zwei Leuchteinheiten (2a, 2b), wobei jede Leuchteinheit (2a, 2b) zumindest eine Lichtquelle (2a1, 2b1) und zumindest einen Schaltungsträger (2a2, 2b2) umfasst,
- sowie zumindest einen Kabelstrang (3) zur elektrischen Verbindung zumindest eines Schaltungsträgers (2a2) einer ersten Leuchteinheit (2a) mit zumindest einem Schaltungsträger (2b2) einer zweiten Leuchteinheit (2b), wobei der zumindest eine Kabelstrang (3) als integraler Bestandteil eines Spritzgussbauteils (4) ausgeführt ist, wobei der zumindest eine Kabelstrang (3) an seinen Enden (3a, 3b) Verbindungsanschlüsse (3a', 3b') aufweist, die zur Kontaktierung des jeweiligen Schaltungsträgers (2a2, 2b2) an der Oberfläche des Spritzgussbauteils (4) freigelegt sind, wobei das Spritzgussbauteil (4) als Halterungsmittel ausgebildet ist, das dazu eingerichtet ist, zumindest eine der zumindest zwei Leuchteinheiten (2a, 2b) zu haltern, wobei das Spritzgussbauteil (4) ein Befestigungsmittel (4a) zur Befestigung an einer Fahrzeugkomponente (5) aufweist.

## Beschreibung

Die Erfindung betrifft eine Fahrzeugleuchte, umfassend zumindest zwei Leuchteinheiten, wobei jede Leuchteinheit zumindest eine Lichtquelle und zumindest einen Schaltungsträger umfasst, sowie zumindest einen Kabelstrang zur elektrischen Verbindung zumindest eines Schaltungsträgers einer ersten Leuchteinheit mit zumindest einem Schaltungsträger einer zweiten Leuchteinheit.

Im Stand der Technik werden Schaltungsträger von Fahrzeugleuchten in der Regel mit einem Stecker/Buchse Prinzip kontaktiert. Bei der Montage muss ein Mitarbeiter per Hand die Steckverbindungen montieren. Jede Steckverbindung verursacht Kosten und muss im Automobilbereich in der Regel zusätzlich mit einer eigenen mechanischen Steckerabsicherung versehen werden, um das Risiko von Ausfällen zu minimieren. Zum Herstellen der Steckverbindungen werden in der Regel Überlängen der Kabel benötigt, um die Montage zu erleichtern/ermöglichen. Die Überlängen müssen wiederum bei der Montage einer Fahrzeugleuchte vor Abrieb, Quetschung und anderen negativen mechanischen Einflüssen geschützt werden. Oftmals werden hier zusätzliche Bauteile wie Kabelstrangführungen oder Kabelbinder verwendet, welche die Kosten zusätzlich in die Höhe treiben. Für die Überlängen muss auch ein entsprechender Bauraum in der Fahrzeugleuchte vorgesehen werden.

Eine Aufgabe der Erfindung besteht darin, eine Fahrzeugleuchte zu schaffen, die verbesserte Montageeigenschaften aufweist. Diese Aufgabe wird mit einer Fahrzeugleuchte der eingangs genannten Art gelöst, bei welcher erfindungsgemäß der zumindest eine Kabelstrang als integraler Bestandteil eines Spritzgussbauteils ausgeführt ist, wobei der zumindest eine Kabelstrang an seinen Enden Verbindungsanschlüsse aufweist, die zur Kontaktierung des jeweiligen Schaltungsträgers an der Oberfläche des Spritzgussbauteils freigelegt sind, wobei das Spritzgussbauteil als Halterungsmittel ausgebildet ist, das dazu eingerichtet ist, zumindest eine der zumindest zwei Leuchteinheiten zu haltern, wobei das Spritzgussbauteil ein Befestigungsmittel zur Befestigung an einer Fahrzeugkomponente aufweist.

Der Schaltungsträger kann auch noch weitere daran angeordnete elektronische Komponenten umfassen. Es können auch beide Leuchteinheiten an dem Spritzgussbauteil befestigt bzw. gehaltert sein. Der Kabelstrang ist dergestalt ausgebildet, dass dieser das Eingießen bei einem Spritzgussvorgang schadlos übersteht. Dies kann z.B. durch Wahl geeigneter hitzebeständiger Materialien, insbesondere Isoliermaterialien.

Insbesondere kann vorgesehen sein, dass das Spritzgussbauteil zumindest einen Halteabschnitt zur Aufnahme und Halterung zumindest eines Lichtleiters aufweist, wobei der zumindest eine Lichtleiter dergestalt in Bezug auf zumindest eine Lichtquelle angeordnet ist, dass in einem Zustand, in dem der Kabelstrang die je zumindest einen Schaltungsträger der ersten und zweiten Leuchteinheit miteinander verbindet, Licht, das durch zumindest eine Lichtquelle abgestrahlt wird, in den Lichtleiter eingekoppelt wird.

Weiters kann vorgesehen sein, dass der zumindest eine Schaltungsträger jeder Leuchteinheit von einem Gehäuse dichtend umschlossen ist, wobei jedes Gehäuse einen den Lichtquellen zugewandten Lichtauskopplungsbereich aufweist, wobei dieser Lichtauskopplungsbereich zumindest teilweise lichtdurchlässig ausgebildet ist, und insbesondere mit einer Linse oder einem Ende eines Lichtleiters verbunden ist, wobei jedes Gehäuse abgesehen von dem besagten Lichtauskopplungsbereich lichtundurchlässig ausgebildet ist. Das Gehäuse kann separat je Leuchteinheit vorgesehen sein, oder auch die zumindest zwei oder mehr Leuchteinheiten inkl. dem Spritzgussbauteil sowie die Leichtleiter umschließen.

Insbesondere kann vorgesehen sein, dass die Fahrzeugleuchte den zumindest einen Lichtleiter oder die zumindest eine Linse zur Aufnahme und Abgabe von Licht, das von zumindest einer der Lichtquellen abgestrahlt wird, aufweist, wobei der Lichtleiter oder die Linse an dem Spritzgussbauteils befestigt ist. Die Linse dichtet das Gehäuse des Schaltungsträgers ab und wird an dem Gehäuse gehalten.

Weiters kann vorgesehen sein, dass sich der Lichtleiter von dem zumindest einen Schaltungsträger zumindest einer Leuchteinheit zu dem zumindest einen Schaltungsträger einer weiteren Leuchteinheit erstreckt.

Insbesondere kann vorgesehen sein, dass der Lichtleiter zur Aufnahme von Licht der Lichtquellen beider Schaltungsträger eingerichtet ist.

Weiters kann vorgesehen sein, dass der Lichtleiter an dem Gehäuse zumindest eines Schaltungsträgers angreift und das Gehäuse 2a3, 2b3) in Bezug auf den Schaltungsträger dichtend verschließt.

Insbesondere kann vorgesehen sein, dass das Spritzgussbauteil lichtundurchlässig ausgebildet ist und den zumindest einen Lichtleiter entlang seiner Längserstreckung entlang zumindest einer Seite abdeckt und fixiert. So kann z.B. die Rückseite des Lichtleiters verdeckt und seine Vorderseite zur Abstrahlung von Licht frei bleiben. Der Lichtleiter kann an seiner verdeckten Seite Lichtauskopplungselemente aufweisen, die das Licht in Richtung der unverdeckten Seite umlenken und ein Auskoppeln entlang der Längserstreckung der Vorderseite verursachen.

Weiters kann vorgesehen sein, dass die Fahrzeugkomponente ein Kühlergrill, ein Stoßfänger, eine Scheinwerferkomponente und/oder ein Bestandteil der Karosserie eines Fahrzeugs ist.

Insbesondere kann vorgesehen sein, dass zumindest ein Schaltungsträger einer Leuchteinheit einen elektrischen Versorgungsanschluss zur Verbindung mit einer von der Fahrzeugleuchte externen Energiequelle aufweist, wobei dieser zumindest eine Schaltungsträger dergestalt ausgebildet ist, dass durch die externe Energiequelle empfangene elektrische Energie zumindest teilweise an einen Schaltungsträger zumindest einer zweiten Leuchteinheit übertragen wird.

Weiters kann vorgesehen sein, dass die Übertragung der Energie zwischen den zumindest zwei Leuchteinheiten über den im Spritzgussbauteil aufgenommenen Kabelstrang erfolgt. Der Kabelstrang kann zusätzlich auch zur Übertragung von Daten, nicht nur Energie, eingesetzt werden. Insbesondere kann es sich dabei um Steuerdaten zur Ansteuerung der Fahrzeugleuchte handeln.

Insbesondere kann vorgesehen sein, dass die Fahrzeugleuchte ein äußeres Gehäuse aufweist, innerhalb welchem die zumindest zwei Leuchteinheiten, das Spritzgussbauteil sowie zumindest ein Lichtleiter und/oder eine Linse angeordnet sind.

Weiters kann vorgesehen sein, dass die Verbindungsanschlüsse des Kabelstrangs als elektrische Kontaktierungen in Form von von dem Kabelstrang abstehenden und über das Spritzgussbauteil hervorragenden Pins ausgebildet sind. Der Vorteil dieser Anordnung im Gegensatz zu einer Variante, in der der Kabelstrang als Buchse mit Vertiefungen ausgebildet ist, liegt darin, dass die Gefahr, dass die Pins durch etwaig überschüssiges Spritzgussmaterial verschlossen werden, deutlich geringer ist, wenn diese von dem Spritzgussbauteil abstehen, als wenn in dem Spritzgussbauteil im Bereich des Kabelstrangs Vertiefungen ausgebildet sind.

Die elektrische Verbindung kann auch zugleich die Aufgabe einer mechanischen Verbindung der betreffenden Komponenten übernehmen.

Insbesondere kann vorgesehen sein, dass die Pins als Presspins ausgebildet sind. Über mechanische Krafteinwirkung wird ein Einpressen in korrespondierende Aufnahme an dem Schaltungsträger erzielt. Die Verwendung von Presspins hat der Vorteil einer hohen mechanischen Stabilität und einer hohen Zuverlässigkeit der elektrischen Verbindung. Unter einem Presspin wird ein Steckkontakt, bei dem abstehende Pins sich bei Eingriff in eine passende Buchse mechanisch verformen können und so eine besonders hohe Festigkeit der Verbindung erzielen.

Weiters betrifft die Erfindung einen Kraftfahrzeugscheinwerfer oder Kühlergrill umfassend eine erfindungsgemäße Fahrzeugleuchte.

Die Erfindung ist im Folgenden anhand beispielhafter und nicht einschränkender Ausführungsformen näher erläutert, die in den Figuren veranschaulicht sind. Darin zeigt
- Figur 1: eine schematische Darstellung einer ersten Ausführungsform der Erfindung,
- Figur 2: eine schematische Darstellung einer zweiten Ausführungsform der Erfindung, und
- Figur 3: eine schematische Darstellung einer beispielhaften Steckverbindung.

In den folgenden Figuren bezeichnen - sofern nicht anders angegeben - gleiche Bezugszeichen gleiche Merkmale.

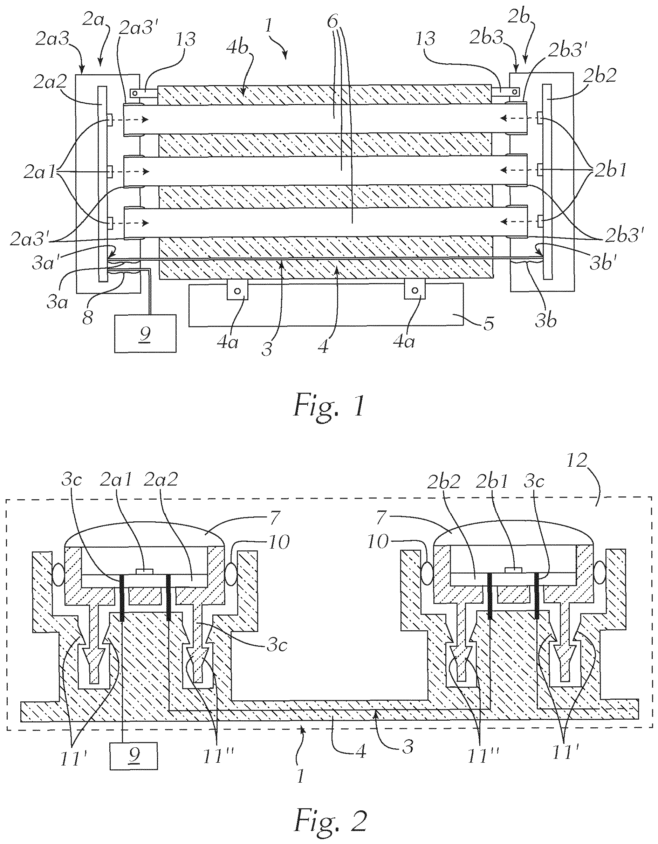

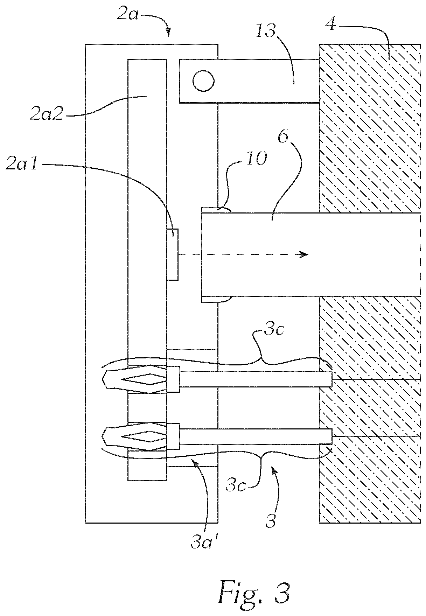

Fig. 1 zeigt eine erste Ausführungsform einer erfindungsgemäßen Fahrzeugleuchte 1. Diese umfasst zumindest zwei Leuchteinheiten 2a, 2b, wobei jede Leuchteinheit 2a, 2b zumindest eine Lichtquelle 2a1, 2b1 und zumindest einen Schaltungsträger 2a2, 2b2 umfasst. Weiters umfasst sie zumindest einen Kabelstrang 3 zur elektrischen Verbindung zumindest eines Schaltungsträgers 2a2 einer ersten Leuchteinheit 2a mit zumindest einem Schaltungsträger 2b2 einer zweiten Leuchteinheit 2b. Der zumindest eine Kabelstrang 3 ist als integraler Bestandteil eines Spritzgussbauteils 4 ausgeführt. Er weist an seinen Enden 3a, 3b Verbindungsanschlüsse 3a', 3b' auf, die zur Kontaktierung des jeweiligen Schaltungsträgers 2a2, 2b2 an der Oberfläche des Spritzgussbauteils 4 freigelegt sind. Das Spritzgussbauteil 4 ist als Halterungsmittel ausgebildet, das dazu eingerichtet ist, zumindest eine der zumindest zwei Leuchteinheiten 2a, 2b zu haltern. In dem vorliegenden Beispiel werden beide Leuchteinheiten 2a und 2b an dem Spritzgussbauteil 4 gehalten, wobei die mechanische Fixierung über Eingriff mit den Verbindungsanschlüssen 3a' und 3b' erfolgen kann. Zudem kann eine zusätzliche mechanische Verbindung 13 zwischen dem Spritzgussbauteil 4 und den Leuchteinheiten 2a und 2b vorgesehen sein. Diese kann z.B. als Schraubverbindung und/oder als Rastverbindung ausgebildet sein. Die mechanische Verbindung 13 ist in Fig. 1 und Fig. 3 beispielhaft dargestellt.

Mit Blick auf Fig. 3 sei nämlich erwähnt, dass ein (oder zwei oder mehr oder alle) Verbindungsanschluss 3a'des Kabelstrangs 3 als elektrische Kontaktierungen in Form von dem Kabelstrang 3 abstehenden und über das Spritzgussbauteil 4 hervorragenden Pins 3c ausgebildet sein können. Die Pins 3c können dabei insbesondere als Presspins ausgebildet sein. Zudem sind in Fig. 1 bis 3 jeweils Dichtringe 10 bzw. Dichtungselemente 10 dargestellt, die dazu dienen, eine etablierte Steckverbindung so abzudichten, dass im Zusammenwirken mit einem umliegenden Gehäuse der Eintritt von Feuchtigkeit hin zu dem Schaltungsträger vermieden werden kann. In Fig. 2 ist zudem ein Rastmechanismus dargestellt, der die Pins 3c zusätzlich mechanisch fixieren kann. Hierzu sind Rastnasen 11' und 11" vorgesehen, die bei im eingesetzten Zustand der Pins 3c diese gegen ein ungewolltes Lösen sichern.

Mit Blick auf Fig. 1 sei nun erwähnt, dass das Spritzgussbauteil 4 ein Befestigungsmittel 4a zur Befestigung an einer Fahrzeugkomponente 5 aufweist. Die Fahrzeugkomponente 5 kann z.B. ein Kühlergrill, ein Stoßfänger, eine Scheinwerferkomponente und/oder ein Bestandteil der Karosserie eines Fahrzeugs sein.

Das Spritzgussbauteil 4 kann zumindest einen Halteabschnitt 4b zur Aufnahme und Halterung zumindest eines Lichtleiters 6 aufweisen. Dieser kann z.B. im Falle der Verwendung eines Lichtleiters mit kreisrundem Querschnitt als eine korrespondierende Vertiefung mit der Kontur eines Kreissegments ausgebildet sein, in die der Lichtleiter 6 formschlüssig einsetzbar ist. Zur Lagefixierung können zusätzlich Klammern und/oder Rastvorrichtungen vorgesehen sein, die den Lichtleiter 6 an dem Spritzgussbauteil 4 fixieren können. Der zumindest eine Lichtleiter 6 kann dergestalt in Bezug auf zumindest eine Lichtquelle 2a1, 2b1 angeordnet sein, dass in einem Zustand, in dem der Kabelstrang 3 die je zumindest einen Schaltungsträger 2a2, 2b2 der ersten und zweiten Leuchteinheit 2a, 2b miteinander verbindet, Licht, das durch zumindest eine Lichtquelle 2a, 2b abgestrahlt wird, in den Lichtleiter 6 eingekoppelt wird. So kann der Lichtleiter 6 z.B. ausgehend von beiden Schaltungsträgern 2a2 und 2b2 gleichmäßig mit Licht versorgt werden und ein homogenes Erscheinungsbild aufweisen.

Natürlich ist es auch denkbar, dass der Kabelstrang 3 sich hin zu einer weiteren in den Figuren nicht gesondert dargestellten Leuchteinheit erstreckt und insbesondere diese ebenso mit elektrischer Energie versorgt.

In Fig. 1 ist erkennbar, dass jeder Schaltungsträger 2a2, 2b2 jeder Leuchteinheit 2a, 2b von einem Gehäuse 2a3, 2b3 dichtend umschlossen ist, wobei jedes Gehäuse 2a3, 2b3 einen den Lichtquellen 2a1, 2b1 zugewandten Lichtauskopplungsbereich 2a3', 2b3' aufweist. Dieser Lichtauskopplungsbereich 2a3', 2b3' ist zumindest teilweise lichtdurchlässig ausgebildet, und insbesondere mit einer Linse oder einem Ende eines Lichtleiters 6 verbunden. Jedes Gehäuse kann, abgesehen von dem besagten Lichtauskopplungsbereich 2a3', 2b3', lichtundurchlässig ausgebildet sein.

Es kann vorgesehen sein, dass die Fahrzeugleuchte 1 den zumindest einen Lichtleiter 6 (Fig. 1) oder die zumindest eine Linse 7 (Fig. 2) zur Aufnahme und Abgabe von Licht aufweist, das von zumindest einer der Lichtquellen 2a1, 2b1 abgestrahlt wird. Der Lichtleiter 6 oder die Linse 7 kann an dem Spritzgussbauteils 4 (direkt oder indirekt z.B. über ein den Schaltungsträger umschließendes Gehäuse) befestigt sein.

Es kann vorgesehen sein, dass sich der Lichtleiter 6 von dem zumindest einen Schaltungsträger 2a2, 2b2 zumindest einer Leuchteinheit 2a, 2b zu dem zumindest einen Schaltungsträger 2a2, 2b2 einer weiteren Leuchteinheit 2a, 2b erstreckt. Insbesondere kann der Lichtleiter 6 zur Aufnahme von Licht der Lichtquellen 2a1, 2a2 beider Schaltungsträger 2a2, 2b2 eingerichtet sein. Es kann vorgesehen sein, dass der Lichtleiter 6 an dem Gehäuse 2a3, 2b3 zumindest eines Schaltungsträgers 2a2, 2b2 angreift und das Gehäuse 2a3, 2b3 in Bezug auf den Schaltungsträger 2a2, 2b2 dichtend verschließt.

Insbesondere kann vorgesehen sein, dass das Spritzgussbauteil 4 lichtundurchlässig ausgebildet ist und den zumindest einen Lichtleiter 6 entlang seiner Längserstreckung entlang zumindest einer Seite abdeckt und fixiert.

Es kann vorgesehen sein, dass zumindest ein Schaltungsträger 2a2, 2b2 einer Leuchteinheit 2a, 2b einen elektrischen Versorgungsanschluss 8 zur Verbindung mit einer von der Fahrzeugleuchte 1 externen Energiequelle 9 aufweist. Der zumindest eine Schaltungsträger 2a2, 2b2 kann dergestalt ausgebildet sein, dass durch die externe Energiequelle 9 empfangene elektrische Energie zumindest teilweise an einen Schaltungsträger 2a2, 2b2 zumindest einer zweiten Leuchteinheit 2b übertragen wird. Die Übertragung der Energie zwischen den zumindest zwei Leuchteinheiten 2a, 2b kann über den im Spritzgussbauteil 4 aufgenommenen Kabelstrang 3 erfolgen.

Mit Blick auf Fig. 3 sei erwähnt, dass vorgesehen sein kann, dass die Fahrzeugleuchte 1 ein äußeres Gehäuse 12 aufweist, innerhalb welchem die zumindest zwei Leuchteinheiten 2a, 2b, das Spritzgussbauteil 4 sowie zumindest ein Lichtleiter 6 und/oder eine Linse 7 angeordnet sind.

Die Erfindung betrifft weiters einen in den Figuren nicht dargestellten Kraftfahrzeugscheinwerfer oder Kühlergrill umfassend eine erfindungsgemäße Fahrzeugleuchte 1.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Fahrzeugleuchte (1), umfassend
- zumindest zwei Leuchteinheiten (2a, 2b), wobei jede Leuchteinheit (2a, 2b) zumindest eine Lichtquelle (2a1, 2b1) und zumindest einen Schaltungsträger (2a2, 2b2) umfasst,
- sowie zumindest einen Kabelstrang (3) zur elektrischen Verbindung zumindest eines Schaltungsträgers (2a2) einer ersten Leuchteinheit (2a) mit zumindest einem Schaltungsträger (2b2) einer zweiten Leuchteinheit (2b),
**dadurch gekennzeichnet, dass**
der zumindest eine Kabelstrang (3) als integraler Bestandteil eines Spritzgussbauteils (4) ausgeführt ist, wobei der zumindest eine Kabelstrang (3) an seinen Enden (3a, 3b) Verbindungsanschlüsse (3a', 3b') aufweist, die zur Kontaktierung des jeweiligen Schaltungsträgers (2a2, 2b2) an der Oberfläche des Spritzgussbauteils (4) freigelegt sind, wobei das Spritzgussbauteil (4) als Halterungsmittel ausgebildet ist, das dazu eingerichtet ist, zumindest eine der zumindest zwei Leuchteinheiten (2a, 2b) zu haltern, wobei das Spritzgussbauteil (4) ein Befestigungsmittel (4a) zur Befestigung an einer Fahrzeugkomponente (5) aufweist.

2. Fahrzeugleuchte (1) nach Anspruch 1, wobei das Spritzgussbauteil (4) zumindest einen Halteabschnitt (4b) zur Aufnahme und Halterung zumindest eines Lichtleiters (6) aufweist, wobei der zumindest eine Lichtleiter (6) dergestalt in Bezug auf zumindest eine Lichtquelle (2a1, 2b1) angeordnet ist, dass in einem Zustand, in dem der Kabelstrang (3) die je zumindest einen Schaltungsträger (2a2, 2b2) der ersten und zweiten Leuchteinheit (2a, 2b) miteinander verbindet, Licht, das durch zumindest eine Lichtquelle (2a, 2b) abgestrahlt wird, in den Lichtleiter (6) eingekoppelt wird.

3. Fahrzeugleuchte (1) nach Anspruch 1 oder 2, wobei der zumindest eine Schaltungsträger (2a2, 2b2) jeder Leuchteinheit (2a, 2b) von einem Gehäuse (2a3, 2b3) dichtend umschlossen ist, wobei jedes Gehäuse (2a3, 2b3) einen den Lichtquellen (2a1, 2b1) zugewandten Lichtauskopplungsbereich (2a3', 2b3') aufweist, wobei dieser Lichtauskopplungsbereich (2a3', 2b3') zumindest teilweise lichtdurchlässig ausgebildet ist, und insbesondere mit einer Linse oder einem Ende eines Lichtleiters (6) verbunden ist, wobei jedes Gehäuse () abgesehen von dem besagten Lichtauskopplungsbereich (2a3', 2b3') lichtundurchlässig ausgebildet ist.

4. Fahrzeugleuchte (1) nach Anspruch 2 und 3, wobei die Fahrzeugleuchte (1) den zumindest einen Lichtleiter (6) oder die zumindest eine Linse (7) zur Aufnahme und Abgabe von Licht, das von zumindest einer der Lichtquellen (2a1, 2b1) abgestrahlt wird, aufweist, wobei der Lichtleiter (6) oder die Linse (7) an dem Spritzgussbauteils (4) befestigt ist.

5. Fahrzeugleuchte (1) nach Anspruch 3 oder 4, wobei sich der Lichtleiter (6) von dem zumindest einen Schaltungsträger (2a2, 2b2) zumindest einer Leuchteinheit (2a, 2b) zu dem zumindest einen Schaltungsträger (2a2, 2b2) einer weiteren Leuchteinheit (2a, 2b) erstreckt.

6. Fahrzeugleuchte (1) nach Anspruch 5, wobei der Lichtleiter (6) zur Aufnahme von Licht der Lichtquellen (2a1, 2a2) beider Schaltungsträger (2a2, 2b2) eingerichtet ist.

7. Fahrzeugleuchte (1) nach einem der Ansprüche 4 bis 6, wobei der Lichtleiter (6) an dem Gehäuse (2a3, 2b3) zumindest eines Schaltungsträgers (2a2, 2b2) angreift und das Gehäuse 2a3, 2b3) in Bezug auf den Schaltungsträger (2a2, 2b2) dichtend verschließt.

8. Fahrzeugleuchte (1) nach einem der vorhergehenden Ansprüche, wobei das Spritzgussbauteil (4) lichtundurchlässig ausgebildet ist und den zumindest einen Lichtleiter (6) entlang seiner Längserstreckung entlang zumindest einer Seite abdeckt und fixiert.

9. Fahrzeugleuchte (1) nach einem der vorhergehenden Ansprüche, wobei die Fahrzeugkomponente (5) ein Kühlergrill, ein Stoßfänger, eine Scheinwerferkomponente und/oder ein Bestandteil der Karosserie eines Fahrzeugs ist.

10. Fahrzeugleuchte (1) nach einem der vorhergehenden Ansprüche, wobei zumindest ein Schaltungsträger (2a2, 2b2) einer Leuchteinheit (2a, 2b) einen elektrischen Versorgungsanschluss (8) zur Verbindung mit einer von der Fahrzeugleuchte (1) externen Energiequelle (9) aufweist, wobei dieser zumindest eine Schaltungsträger (2a2, 2b2) dergestalt ausgebildet ist, dass durch die externe Energiequelle (9) empfangene elektrische Energie zumindest teilweise an einen Schaltungsträger (2a2, 2b2) zumindest einer zweiten Leuchteinheit (2b) übertragen wird.

11. Fahrzeugleuchte (1) nach Anspruch 10, wobei die Übertragung der Energie zwischen den zumindest zwei Leuchteinheiten (2a, 2b) über den im Spritzgussbauteil (4) aufgenommenen Kabelstrang (3) erfolgt.

12. Fahrzeugleuchte (1) nach einem der Ansprüche 3 bis 9, wobei die Fahrzeugleuchte (1) ein äußeres Gehäuse (12) aufweist, innerhalb welchem die zumindest zwei Leuchteinheiten (2a, 2b), das Spritzgussbauteil (4) sowie zumindest ein Lichtleiter (6) und/oder eine Linse (7) angeordnet sind.

13. Fahrzeugleuchte (1) nach einem der vorhergehenden Ansprüche, wobei die Verbindungsanschlüsse (3a', 3b') des Kabelstrangs (3) als elektrische Kontaktierungen in Form von von dem Kabelstrang (3) abstehenden und über das Spritzgussbauteil (4) hervorragenden Pins (3c) ausgebildet sind.

14. Fahrzeugleuchte (1) nach Anspruch 13, wobei die Pins (3c) als Presspins ausgebildet sind.

15. Kraftfahrzeugscheinwerfer oder Kühlergrill umfassend eine Fahrzeugleuchte (1) nach einem der vorhergehenden Ansprüche.
